# EUROPÄISCHE PATENTSCHRIFT

(11) **EP 1 213 110 B1**
(45) Veröffentlichungstag und Bekanntmachung des Hinweises auf die Patenterteilung: **20.08.2003**
(21) Anmeldenummer: 01128002.1
(22) Anmeldetag: 24.11.2001
(51) Int. Cl.: B29B 7/18, B29B 7/82, B29B 7/74

(54) **Verfahren zur Herstellung einer kieselsäurehaltigen Kautschukgrundmischung**
Process for preparation of rubber compositions containing silica
Procédé pour la préparation d'une composition de caoutchouc contenant de la silice

(30) Priorität: 08.12.2000 DE 10061473
(43) Veröffentlichungstag der Anmeldung: 12.06.2002
(73) Patentinhaber: Continental Aktiengesellschaft, 30165 Hannover (DE); Peter, Julius, Dr., 1130 Wien (AT)
(72) Erfinder: Peter, Julius, Dr., 1130 Wien (AT); Heidrich, Winfried, 31867 Lauenau (DE); Gross, Dirk, A-2500 Baden (AT); Sandau, Heinrich, 31303 Burgdorf (DE)

(56) Entgegenhaltungen:
- EP-A- 0 728 803
- EP-A- 0 837 095
- US-A- 4 910 237
- US-A- 5 496 107
- PATENT ABSTRACTS OF JAPAN vol. 008, no. 120 (M-300), 6. Juni 1984 (1984-06-06) -& JP 59 024646 A (TOYODA GOSEI KK), 8. Februar 1984 (1984-02-08)

## Beschreibung

Die Erfindung betrifft ein Verfahren zur Herstellung einer kieselsäurehaltigen Kautschukgrundmischung, das in zwei Stufen in unterschiedlichen Mischern durchgeführt wird und bei dem die Mischungsbestandteile Kieselsäure, Silan und weitere übliche Zusatzstoffe außer Vulkanisationsbestandteilen vermischt werden und die Kieselsäure mit dem Silan reagiert.

Fermer betrifft die Erfindung eine Vorrichtung mit einem ersten Mischer und einem zweiten Mischer zur Durchführung des oben genannten Verfahrens.

Kieselsäurehaltige Kautschukmischungen werden heute zur Herstellung unterschiedlichster Kautschukprodukte, insbesondere zur Herstellung von Kraftfahrzeugreifen verwendet. In Kraftfahrzeugreifen ersetzt die Kieselsäure zum größten Teil die früher üblichen Rußbestandteile, da sich gezeigt hat, dass Kraftfahrzeugreifen durch den Zusatz von Kieselsäure bessere Reifeneigenschaften in Bezug auf Nassgriff und Rollwiderstand bekommen. Zur Herstellung der Kautschukmischung wird zunächst in einem Grundmischverfahren in einer oder mehreren Mischstufen eine kieselsäurehaltige Kautschukgrundmischung hergestellt, die noch keine Vulkanisationsbestandteile (Vulkanisationschemikalien wie z. B. Schwefel, Schwefelspender, Beschleuniger oder Harze) enthält. In einem Fertigmischverfahren werden der Kautschukgrundmischung dann die Vulkanisationsbestandteile (Vulkanisationschemikalien) zugefügt und es entsteht die fertige Kautschukmischung (Fertigmischung). Bei der Herstellung der Kautschukgrundmischung werden dieser neben der Kieselsäure Kupplungsagenzien in Form von Silanen beigefügt, um eine Anbindung der Kieselsäure an den Kautschuk zu ermöglichen. Bei den Silanen handelt es sich i. A. um bifunktionelle Organsilane wie z. B. 3-Mercaptopropyltriethoxysilan, 3-Thiocyanato-propyltrimetoxysilan oder 3,3'-Bis(triethoxysilylpropyl)polysulfide mit 2 bis 8 Schwefelatomen. Hierbei reagiert in einem ersten Schritt während des Grundmischens das zugesetzte Silan mit den Silanolgruppen der Kieselsäure und in einem zweiten späteren Schritt während der Vulkanisation der Kautschukmischung das Silan mit dem Kautschuk, wodurch die Kieselsäure über das Silan mit diesem verbunden wird. Der erste Reaktionsschritt und damit die Herstellung der Kautschukgrundmischung erfordert einen hohen Zeitaufwand.

Aus der EP 0 728 803 A1 ist ein Verfahren zur Herstellung einer kieselsäurehaltigen Kautschukgrundmischung der eingangs genannten Art bekannt. In einer ersten Stufe des Verfahrens werden in einem ersten Mischer die Mischungsbestandteile Kautschuk, Kieselsäure und weitere übliche Zusatzstoffe außer Vulkanisationsbestandteilen bei einer Temperatur von 165 °C bis 170 °C miteinander vermischt. Nach der Vermischung der Mischungsbestandteile wird die Mischung aus dem ersten Mischer herausgelöst, abgekühlt und in einen zweiten Mischer überführt. In dem zweiten Mischer wird der Mischung Silan zugefügt und die Mischung wird bei einer Temperatur von 135 °C zu Ende gemischt, wobei das Silan mit der Kieselsäure reagiert. Durch die hohe Temperatur der Mischung in dem ersten Mischer ist gewährleistet, dass die Mischungsbestandteile schnell und gut dispergieren, wohingegen durch die Einhaltung der Temperatur von 135 °C in dem zweiten Mischer einer thermischen Zersetzung des Silans vorgebeugt werden soll. Darüber hinaus wird durch die Verwendung zweier Mischer der Vorteil erreicht, dass zeitgleich (im ersten Mischer) eine Kautschukgrundmischung ohne Silan gemischt und (im zweiten Mischer) eine Kautschukgrundmischung mit Silan zu Ende gemischt werden kann. Dadurch lässt sich der Zeitaufwand zur Herstellung einer kieselsäurehaltigen Kautschukgrundmischung verkürzen.

Es ist jedoch festzustellen, dass bei dem aus der EP 0 728 803 A1 bekannten Verfahren die kieselsäurehaltige Kautschukgrundmischung in einem Zwischenschritt heruntergekühlt werden muss, was zu einem zusätzlichen Zeit- und Lageraufwand führt.

Ferner sind zwei - oder mehrstufige Misch vorrichtungen aus der US-A- 4 910 237 oder aus der US-A- 5 496 107 bekannt.

Der Erfindung liegt die Aufgabe zu Grunde, ein einfaches, mit geringem Zeitaufwand durchführbares Verfahren zur Herstellung einer kieselsäurehaltigen Kautschukgrundmischung zu schaffen.

Gemäß den kennzeichnenden Merkmalen des Anspruchs 1 wird diese Aufgabe durch folgende Verfahrensschritte gelöst:
- In einem ersten Mischer werden sämtliche Mischungsbestandteile (also der Kautschuk, die Kieselsäure, das Silan und weitere übliche Zusatzstoffe außer Vulkanisationsbestandteilen) zeitgleich oder zeitversetzt eingebracht
- die Mischungsbestandteile werden in dem ersten Mischer zu einer Mischung vermischt
- die in dem ersten Mischer entstandene Mischung wird ohne Zwischenlagerung unmittelbar von dem ersten Mischer in einen zweiten Mischer überführt
- in dem zweiten Mischer wird die Mischung zumindest nahezu zu Ende gemischt, wobei die Temperatur der Mischung zumindest über den größten Teil der Verweildauer der Mischung in dem zweiten Mischer in einem Temperaturbereich von 130 °C bis 180 °C liegt, in dem die Kieselsäure beschleunigt mit dem Silan reagiert.

Die oben genannte Aufgabe wird erfindungsgemäß ferner durch die Vorrichtung nach Anspruch 13 gelöst.

In dem ersten und zweiten Mischer wird also eine Kautschukgrundmischung erstellt, wobei in dem zweiten Mischer das Silan zumindest nahezu vollständig mit den Silanolgruppen der Kieselsäure reagiert (d. h. die Kautschukgrundmischung ist dann zumindest nahezu zuende gemischt). In weiteren Verarbeitungsstationen wird die Kautschukgrundmischung weiterverarbeitet und in der letzten Verarbeitungsstation werden der Kautschukgrundmischung die Vulkanisationsbestandteile (Vulkanisationschemikalien) zugefügt und die Kautschukgrundmischung wird dort in einem Fertigmischverfahren fertiggemischt).

In dem ersten Mischer werden in dem Kautschuk (oder in den Kautschuken) die übrigen Mischungsbestandteile dispergiert; hierbei wird die Temperatur der Mischung bis auf maximal 180 °C erhöht, um ein "Anscorchen" (anbrennen) der Mischung weitgehend zu verhindern. Es ist möglich, dass die Mischungstemperatur vor dem Überführen der Mischung von dem ersten Mischer in den zweiten Mischer unter 130 °C liegt. In diesem Fall muss die Mischungstemperatur in dem zweiten Mischer zunächst auf eine Temperatur in dem Temperaturbereich zwischen 130 °C und 180 °C erhöht werden, bevor sie in dem zweiten Mischer zu Ende gemischt wird. Zur Einstellung der Temperaturen in den Mischem wird der Füllgrad der Mischung, die Drehzahl der Rotoren der Mischer, die Mischertemperierung und der Stempeldruck des Mischers (sofern der entsprechende Mischer einen Stempel enthält) aufeinander abgestimmt.

Ein Vorteil der Erfindung ist insbesondere darin zu sehen, dass das Verfahren mit einem geringen Zeit- und Raumaufwand durchgeführt werden kann, da eine Zwischenlagerung und Abkühlung der Kautschukgrundmischung nach dem Herauslösen dieser aus dem ersten Mischer entfällt. Ein weiterer Vorteil der Erfindung ist darin zu sehen, dass sämtliche Mischungsbestandteile der Kautschukgrundmischung in den ersten Mischer eingebracht werden und deshalb auch nur stationäre Dosiereinrichtungen im Bereich des ersten Mischers benötigt werden. Darüber hinaus ist sichergestellt, dass die einzelnen Mischungsbestandteile in der Kautschukgrundmischung in den richtigen Mengen vorliegen. Dies ist bei dem aus der EP 0 728 803 A 1 bekannten Verfahren nicht sichergestellt; so kann es sein, dass bei dem Herauslösen der Kautschukgrundmischung aus dem ersten Mischer Mischungsbestandteile in dem ersten Mischer verbleiben, so dass der Kautschukgrundmischung im zweiten Mischer zu viel Silan zugefügt wird; andererseits kann es sein, dass Reste aus vorherigen Mischvorgängen mit der Kautschukgrundmischung aus dem ersten Mischer herausgelöst werden, so dass der Kautschukgrundmischung in dem zweiten Mischer zu wenig Silan zugefügt wird. Gegenüber einem Verfahren zur Herstellung einer Kautschukgrundmischung, bei dem nur ein einziger Mischer benutzt wird, ist der Vorteil der Erfindung darin zu sehen, dass der erste und der zweite Mischer zeitgleich betrieben werden können, so dass sich die Taktzeit, in der eine Kautschukgrundmischung zuende gemischt ist, verkürzt. (Eine Verkürzung der Taktzeit ließe sich zwar auch dadurch erreichen, dass man zwei einzelne Mischer aufstellt, in denen jeweils unabhängig voneinander eine Kautschukgrundmischung ersteht. Dies würde jedoch viel Platz und darüber hinaus für jeden Mischer eine Dosiereinrichtung oder eine bewegbare Dosiereinrichtung, die beide Mischer bedienen kann, erfordern, was aufwendig und teuer ist.

Gemäß einer Weiterbildung der Erfindung nach Anspruch 2 wird die Mischung in dem ersten Mischer auf eine Temperatur erwärmt, die in einem Temperaturbereich von 110 °C bis 140 °C liegt. Der Vorteil dieser Weiterbildung ist darin zu sehen, dass in dem ersten Mischer bereits eine hohe Temperatur erreicht wird, und somit eine gute Dispersion der Mischungsbestandteile gewährleistet ist. Darüber hinaus braucht in diesem Fall in dem zweiten Mischer nur noch eine geringfügige bzw. keine Temperaturerhöhung stattzufinden.

Gemäß einer Weiterbildung der Erfindung nach Anspruch 3 wird die Mischung in dem ersten Mischer auf eine Temperatur erhöht, die in einem Temperaturbereich von 130 °C bis 180 °C liegt. Der Vorteil dieser Weiterbildung ist darin zu sehen, dass bereits in dem ersten Mischer eine beschleunigte Reaktion der Kieselsäure mit dem Silan stattfindet. Darüber hinaus braucht in diesem Fall in dem zweiten Mischer keine weitere Temperaturerhöhung der Mischung vorgenommen zu werden. Ein weiterer Vorteil dieser Weiterbildung ist darin zu sehen, dass die Verweilzeiten der Mischung in den einzelnen Mischern optimal aufeinander abgestimmt werden können (Näheres s. Ausführungen zu Anspruch 5).

Gemäß einer Weiterbildung der Erfindung nach Anspruch 4 stimmt die Verweildauer der Mischung in dem ersten Mischer zumindest nahezu mit der Verweildauer der Mischung in dem zweiten Mischer überein. Der Vorteil dieser Weiterbildung ist darin zu sehen, dass die beiden Mischer immer gleichzeitig genutzt und so aufeinander abgestimmt werden können, dass eine Überführung der Mischung von dem ersten Mischer in den zweiten Mischer und ein Auswurf einer in dem zweiten Mischer zumindest nahezu zu Ende gemischten Kautschukgrundmischung gleichzeitig bzw. kurz hintereinander stattfinden können. Somit ist eine optimale Ausnutzung der Kapazität der beiden Mischer und die Herstellung einer Kautschukgrundmischung in einer optimalen Taktzeit (die der Verweildauer der Mischung in einem Mischer entspricht) möglich.

Eine Weiterbildung der Erfindung nach Anspruch 5 ist dadurch gekennzeichnet, dass
- ein erster Zeitraum benötigt wird, um die Mischungsbestandteile in der Mischung gleichmäßig zu verteilen
- ein zweiter Zeitraum, der länger als der erste Zeitraum ist, benötigt wird, um in der Mischung eine zumindest nahezu vollständige Reaktion der Kieselsäure mit dem Silan herbeizuführen und dass
- die jeweilige Verweildauer der Mischung in dem ersten Mischer bzw. in dem zweiten Mischer der Hälfte der Gesamtzeit entspricht, die sich aus dem ersten und dem zweiten Zeitraum zusammensetzt, wobei die Temperatur der Mischung in dem ersten Mischer zumindest über eine Zeitspanne in dem Temperaturbereich von 130 °C bis 180 °C gehalten wird, die der Differenz zwischen dem zweiten Zeitraum und der Verweildauer der Mischung in den zweiten Mischer entspricht.

Der Vorteil dieser Weiterbildung ist darin zu sehen, dass die Verweildauer der Mischung in den Mischern auch dann übereinstimmt, wenn die Reaktion der Kieselsäure mit dem Silan einen längeren Zeitraum benötigt als die Dispersion der Mischungsbestandteile zu einer Mischung (was insbesondere bei den Kautschukgrundmischungen zur Herstellung von Kraftfahrzeugreifen häufig der Fall ist).

Gemäß einer Weiterbildung der Erfindung nach Anspruch 6 ist der erste Mischer ein Stempelmischer. Der Vorteil dieser Weiterbildung ist darin zu sehen, dass in dem ersten Mischer mit Hilfe des Stempels ein hoher Druck aufgebaut werden kann, so dass eine gute Dispersion der Mischungsbestandteile auch bei den relativ niedrigen Temperaturen in dem ersten Mischer gewährleistet ist.

Gemäß einer Weiterbildung der Erfindung nach Anspruch 7 greifen die Rotoren des ersten Mischers ineinander. Der Vorteile dieser Weiterbildung ist darin zu sehen, dass eine bessere und schnellere Dispersion der Mischungsbestandteile als bei einem Mischer ohne ineinandergreifende Rotoren möglich ist, weil sich das Verhältnis der Oberfläche der Rotoren zum Füllvolumen des Mischers verbessert. Die schnellere Durchmischung der Mischungsbestandteile in dem ersten Mischer führt zu verkürzten Mischzeiten für die Kautschukgrundmischung.

Gemäß einer Weiterbildung der Erfindung nach Anspruch 8 ist der zweite Mischer ein stempelloser Mischer. Der Vorteil dieser Weiterbildung ist darin zu sehen, dass stempellose Mischer offen sind und auf Grund dessen eine einfache Überführung der Kautschukgrundmischung von dem ersten Mischer in den zweiten Mischer möglich ist. Eine weiterer Vorteil der Weiterbildung ist darin zu sehen, dass ein einfaches und sicheres Abführen der Reaktionsprodukte der Kieselsäure/Silan-Reaktion aus dem offenen stempellosen Mischer möglich ist, so dass eine hochwertige Kautschukgrundmischung entsteht.

Die Rotoren des zweiten Mischers können tangierend sein.Gemäß einer Weiterbildung der Erfindung nach Anspruch 9 greifen die Rotoren des zweiten Mischers jedoch ineinander. Der Vorteil dieser Weiterbildung ist darin zu sehen, dass ein ineinandergreifender Mischer ein gutes Verhältnis der Oberfläche der Rotoren zum Füllvolumen des Mischers aufweist und somit gewährleistet ist, dass innerhalb einer relativ kurzen Zeit die gesamte Mischung zwischen den Rotoren des zweiten Mischers hindurchläuft und es infolgedessen zu einer vollständigen Kieselsäure mit dem Silan kommt.

Gemäß einer Weiterbildung der Erfindung nach Anspruch 10 hat der zweite Mischer ein größeres Füllvolumen als der erste Mischer. Vorzugsweise ist das Füllvolumen des zweiten Mischers um 20 bis 60 % größer als das Füllvolumen des ersten Mischers. Von dieser Weiterbildung wird bevorzugt Gebrauch gemacht, wenn der erste Mischer ein Stempelmischer und der zweite Mischer ein stempelloser Mischer ist. Der Vorteil dieser Weiterbildung wird verständlich, wenn man Folgendes berücksichtigt: Bei einem Stempelmischer wird die Mischung durch den Stempel ständig zwischen die Rotoren des Mischers gedrückt, so dass eine gute Durchmischung der Mischung gewährleistet ist. Bei einem stempellosen Mischer hingegen besteht die Gefahr, dass die Mischung durch die Rotation der Rotoren den Bereich zwischen den Rotoren verlässt und auf Grund des fehlenden Stempels nicht wieder in diesen Bereich gelangt. Eine gute Durchmischung der Mischung ist dann nicht mehr gewährleistet. Diese Gefahr ist umso größer, je geringer das Füllvolumen des Mischers ist. Der Vorteil der Weiterbildung ist also darin zu sehen, dass durch das größere Füllvolumen des zweiten Mischers nahezu die gesamte Mischung von dem Bereich zwischen den Rotoren aufgenommen werden kann und sich nahezu ständig in diesem Bereich befindet, so dass auch ohne einen Stempel eine gute Durchmischung der Kautschukgrundmischung im zweiten Mischer gewährleistet ist.

Gemäß einer Weiterbildung der Erfindung nach Anspruch 11 ist zwischen den Mischern eine Absauganlage angeordnet, mit der Reaktionsprodukte abgesaugt werden, die bei der Reaktion der Kieselsäure mit dem Silan im zweiten Mischer entstehen. Der Vorteil dieser Weiterbildung ist darin zu sehen, dass ein schnelles und vollständiges Absaugen der Reaktionsprodukte gewährleistet ist, wodurch sich die Mischungszeiten im zweiten Mischer verkürzen und sich die Qualität der Kautschukgrundmischung nochmals erhöht.

Gemäß einer Weiterbildung des Verfahrens nach Anspruch 12 erfolgt die Überführung der Mischung von dem ersten Mischer in den zweiten Mischer unter Ausnutzung der Schwerkraft. In diesem Fall ist der erste Mischer vorzugsweise direkt oberhalb des zweiten Mischers angeordnet. Ein Vorteil dieser Weiterbildung ist darin zu sehen, dass zur Überführung der Mischung von dem ersten Mischer in den zweiten Mischer keine Hilfsmittel, z.B. in Form eines Förderbandes etc., notwendig sind. Ein weiterer Vorteil dieser Weiterbildung ist darin zu sehen, dass die beiden Mischer besonders platzsparend zueinander angeordnet sind.

Ein Ausführungsbeispiel und weitere Vorteile der Erfindung werden im Zusammenhang mit den nachstehenden Figuren erläutert, darin zeigen:
- Figur 1: eine Vorrichtung, mit der ein Verfahren zur Herstellung einer kieselsäurehaltigen Kautschukgrundmischung durchführbar ist,
- Figur 2: ein Diagramm,
- Figur 3: ein Diagramm.

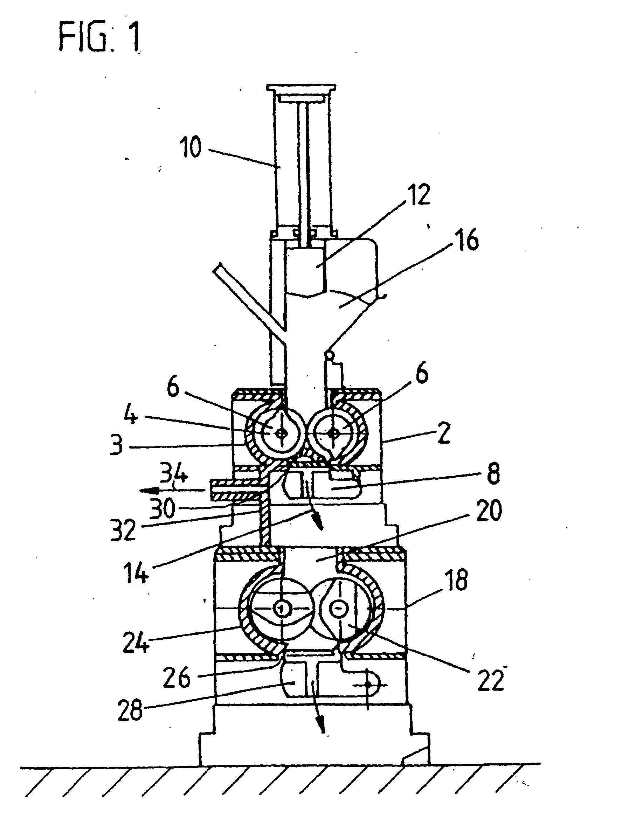

Figur 1 zeigt in schematischer Darstellung eine Vorrichtung zur Herstellung einer kieselsäurehaltigen Kautschukgrundmischung. Die Vorrichtung weist einen ersten Mischer 2 mit einer Mischkammer 4 auf, in der sich zwei (vorzugsweise ineinander greifende) Rotoren 6 befinden. Der Mischer 2 weist darüber hinaus einen nach unten klappbaren Sattel 8 und einen durch einen Arbeitszylinder 10 bewegbaren Stempel 12 zum Verschließen der Eintrittsöffnung der Mischkammer 4 auf. Der Sattel 8 kann in an sich bekannter Art und Weise um eine horizontale Achse von der in der Figur gezeigten Schließstellung im Sinne des Pfeiles 14 in eine Öffnungsstellung geklappt werden, in der er eine etwa senkrechte Stellung einnimmt. In dieser Stellung gibt der Sattel 8 die Austrittsöffnung 30 der Mischkammer 4 frei. Im Bereich des Stempels 12 befinden sich die Eintrittsöffnungen bzw. der Trichter 16 für Mischungsbestandteile der Kautschukgrundmischung.

Unterhalb des ersten Mischers 2 ist ein stempelloser zweiter Mischer 18 angeordnet, dessen Mischkammer 24 ein um vorzugsweise 20 bis 60 % größeres Füllvolumen hat als die Mischkammer 4 des ersten Mischers 2. Der zweite Mischer 18 weist eine Eintrittsöffnung 20 und (vorzugsweise ineinander greifende) Rotoren 22 auf, die sich in der Mischkammer 24 befinden. Die Austrittsöffnung 26 des zweiten Mischers 18 wird von einem bewegbaren Sattel 28 verschlossen, der in an sich bekannter Art und Weise um eine horizontale Achse von der in der Figur gezeigten Schließstellung in eine Öffnungsstellung geklappt werden kann, in der er die Austrittsöffnung 26 der Mischkammer 24 freigibt.

Der zweite Mischer 18 ist derart unter dem ersten Mischer 2 angeordnet, dass sich die Austrittsöffnung 30 des ersten Mischers 2 oberhalb der Eintrittsöffnung 20 des zweiten Mischers 18 befindet. Diese Anordnung macht es möglich, dass eine Mischung ausschließlich unter Ausnutzung der Schwerkraft von der Mischkammer 4 des ersten Mischers 2 in die Mischkammer 24 des zweiten Mischers 18 überführt werden kann. Vorzugsweise wird die Austrittsöffnung 30 des ersten Mischers 2 über einen Kanal 32 mit der Eintrittsöffnung 20 des zweiten Mischers 18 verbunden, an den eine Absauganlage 34 (angedeutet durch den Pfeil) angeschlossen ist.

In der gezeigten Vorrichtung wird eine Kautschukgrundmischung grundsätzlich wie folgt hergestellt: Zunächst werden über den Trichter 16 sämtliche Mischungsbestandteile der Kautschukgrundmischung zeitgleich oder zeitversetzt in die Mischkammer 34 des ersten Mischers 2 eingebracht, also Kautschuk, Kieselsäure, Silan und weitere übliche Zusatzstoffe außer den Vulkanisationsbestandteilen. Mit Hilfe der Rotoren 6 werden die Mischungsbestandteile durchmischt. Hierbei werden die Mischungsbestandteile durch den Stempel 12 zwischen die Rotoren 6 gedrückt, wodurch eine gute Dispersion der Mischungsbestandteile gewährleistet wird. Während des Mischens der Mischung in dem ersten Mischer 2 wird die Temperatur der Mischung kontinuierlich erhöht, was durch eine entsprechende Anpassung des Stempeldruckes des Stempels 12, der Drehzahl der Rotoren 6 und Mischertemperierung erfolgt.

Wenn eine gute Dispersion der Mischungsbestandteile erreicht ist, wird die Temperatur der Mischung in dem ersten Mischer 2 auf einen Wert gebracht, der in dem Temperaturbereich liegt, in dem die Kieselsäure mit dem Silan reagiert (also auf eine Temperatur, die in dem Temperaturbereich von 130 °C - 180 °C liegt). Die Erhöhung der Temperatur erfolgt wiederum durch eine Anpassung des Stempeldruckes des Stempels 12, der Drehzahl der Rotoren 6 und Mischertemperierung.

Wenn die Mischung die gewünschte Temperatur in dem genannten Temperaturbereich erreicht hat, wird gegebenenfalls bei dieser Temperatur ein erster Teil der Reaktion der Kieselsäure mit dem Silan in dem ersten Mischer 2 durchgeführt. Sobald die gewünschte Temperatur erreicht ist oder sobald ein erster Teil der Reaktion durchgeführt ist, wird der Sattel 8 des ersten Mischers 2 von der in der Figur gezeigten Schließstellung in die Öffnungsstellung überführt, so dass er die Austrittsöffnung 30 des ersten Mischers 2 freigibt. Die Mischung wird dann ausschließlich unter Ausnutzung der Schwerkraft von der Mischkammer 4 durch den Kanal 32 und durch die Eintrittsöffnung 20 in die Mischkammer 24 des zweiten Mischers 18 ohne Zwischenlagerung überführt, so dass die Mischungstemperatur erhalten bleibt. In dem zweiten Mischer 18 wird die Mischung zu Ende gemischt, wobei die Temperatur der Mischung vorzugsweise konstant in dem Temperaturbereich von 130 °C - 180 °C gehalten wird, in dem die Kieselsäure beschleunigt mit dem Silan reagiert. Dies erfolgt durch eine entsprechende Abstimmung der Drehzahl der Rotoren 22 und der Mischertemperierung.

Die Mischung verbleibt so lange in der Mischkammer 24 des zweiten Mischers 18, bis zumindest eine nahezu vollständige Reaktion der Kieselsäure mit dem Silan sichergestellt ist (d. h. die Kautschukgrundmischung zumindest nahezu zuende gemischt ist). Die bei der Reaktion der Kieselsäure mit dem Silan entstehenden Reaktionsprodukte werden während des Mischens über den Kanal 32 mit Hilfe der Absauganlage 34 abgesaugt, so dass keine qualitätsmindernden Reaktionsprodukte in der Mischung verbleiben. Nach abgeschlossener Reaktion, wenn die Kautschukgrundmischung also zu Ende gemischt ist, wird der Sattel 28 von der in der Figur gezeigten Schließstellung in die Öffnungsstellung überführt, so dass sich die Kautschukgrundmischung aus der Mischkammer 24 des zweiten Mischers 18 durch die Austrittsöffnung 26 herauslöst. In weiteren (nicht gezeigten) Verarbeitungsstationen wird die Kautschukgrundmischung weiterverarbeitet und in der letzten Verarbeitungsstation werden der Kautschukgrundmischung die Vulkanisationsbestandteile zugefügt und die Kautschukgrundmischung wird dort in einem Fertigmischverfahren fertiggemischt.

Nachdem die Mischung über die Austrittsöffnung 30 die Mischkammer 4 des ersten Mischers 2 verlassen hat, steht der erste Mischer 2 wieder für die Mischung einer Kautschukgrundmischung bereit, so dass immer zeitgleich in dem ersten Mischer 2 und in dem zweiten Mischer 18 gemischt werden kann.

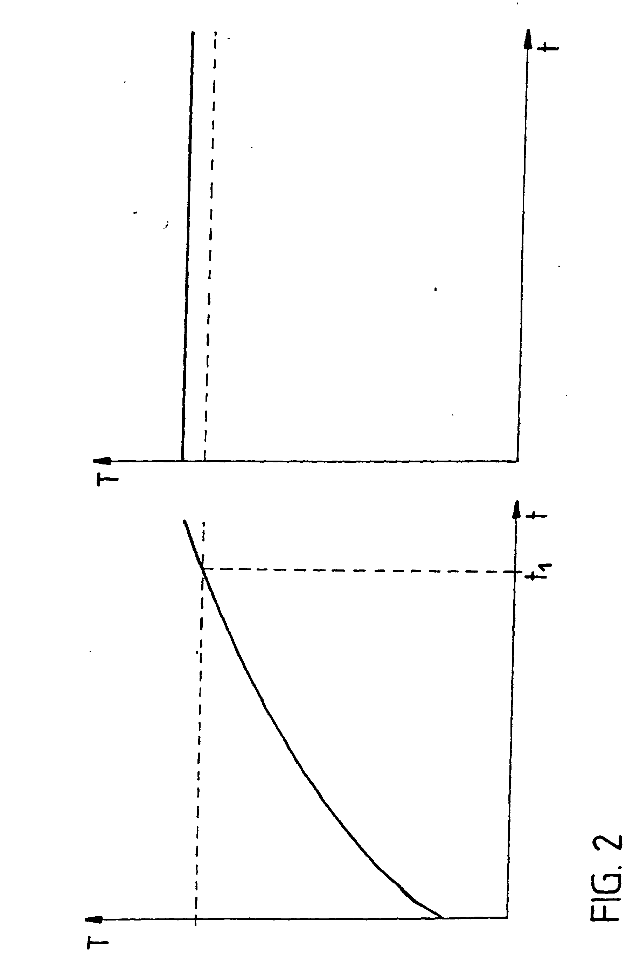

Figur 2 zeigt ein Diagramm, in dem die Temperatur T in den Mischern 2, 18 über der Zeit t aufgetragen ist. Hierbei ist eine Mischung zugrunde gelegt, bei der die Dispersion der Mischungsbestandteile in etwa die gleiche Zeit in Anspruch nimmt, wie die vollständige Reaktion der Kieselsäure mit dem Silan. Der linke Teil des Diagramms den zeitlichen Temperaturverlauf für die Mischung in dem ersten Mischer 2. Dem Diagramm ist zu entnehmen, dass die Temperatur der Mischungsbestandteile ausgehend von der Raumtemperatur in dem ersten Mischer 2 kontinuierlich erhöht wird, wobei die Mischungsbestandteile dispergieren. Nach einer Zeitspanne t₁ hat die Mischung in dem ersten Mischer eine Temperatur von 130 °C erreicht, bei der die Kieselsäure in der Mischung beginnt, intensiv mit dem Silan zu reagieren. Die Temperatur der Mischung wird in dem ersten Mischer 2 danach nur noch leicht erhöht, so dass sie in einem Temperaturbereich von 130 °C - 180 °C liegt.

Wenn die Temperatur der Mischung in dem ersten Mischer 2 die gewünschte Temperatur in dem genannten Temperaturbereich erreicht hat, wird die Mischung von dem ersten Mischer 2 in den zweiten Mischer 18 überführt und dort bei dieser Temperatur, die konstant gehalten wird, zu Ende gemischt (siehe rechter Teil des Diagramms, der den zeitlichen Temperaturverlauf der Mischung in dem zweiten Mischer 18 zeigt). Die Verweilzeiten der Mischung in den Mischern 2, 18 sind nahezu identisch, da in dem ersten Mischer 2 nahezu ausschließlich die Dispersion und in dem zweiten Mischer 18 die Reaktion der Kieselsäure mit dem Silan stattfindet.

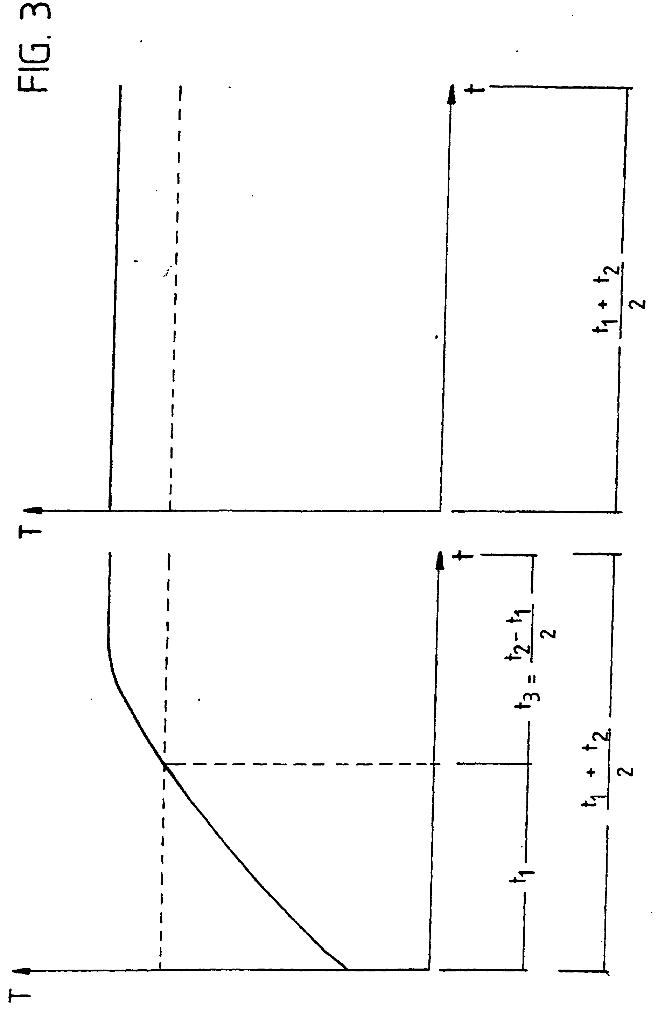

Figur 3 zeigt ein Diagramm, in dem die Temperatur T in den Mischern 2, 18 über der Zeit t aufgetragen ist. Hierbei ist eine Mischung zugrunde gelegt, bei der die gleichmäßige Verteilung der Mischungsbestandteile einen ersten Zeitraum t₁ und die zumindest nahezu vollständige Reaktion der Kieselsäure mit dem Silan einen zweiten Zeitraum t₂ in Anspruch nimmt, der länger ist als der erste Zeitraum t₁. Auch in diesem Fall ist es möglich, die Verweilzeiten der Mischung in den Mischern 2, 18 derart aufeinander abzustimmen, dass sie identisch sind, wie im Folgenden erläutert wird (hierbei zeigt der linke Teil des Diagramms den zeitlichen Temperaturverlauf für die Mischung in dem ersten Mischer 2 und der rechte Teil des Diagramms den zeitlichen Temperaturverlauf für die Mischung in dem zweiten Mischer 18). In dem ersten Mischer 2 werden die Mischungsbestandteile zeitgleich oder zeitversetzt eingebracht und über einen Zeitraum t₁ dispergiert. Hierbei wird die Temperatur der Mischungsbestandteile ausgehend von der Raumtemperatur auf eine Temperatur von ca. 130 °C erhöht. Bei dieser Temperatur beginnt die Kieselsäure intensiv mit dem Silan zu reagieren. Nach Ablauf des ersten Zeitraumes t₁ wird die Temperatur der Mischung auf eine gewünschte Temperatur in dem Temperaturbereich von 130 °C bis 180 C erhöht. Insgesamt wird die Temperatur der Mischung in dem ersten Mischer 2 über eine Zeitspanne t₃ = (t₂ - t₁)/2 in dem Temperaturbereich von 130 °C bis 180 C gehalten. Die Verweildauer der Mischung in dem ersten Mischer 2 beträgt insgesamt (t₁ + t₂)/2.

Nach Ablauf der Zeitspanne t₃ wird die Mischung ohne Zwischenlagerung unmittelbar von dem ersten Mischer 2 in den zweiten Mischer 18 überführt. In dem zweiten Mischer 18 liegt die Temperatur der Mischung über die gesamte Verweildauer (t₁ + t₂)/2 der Mischung in dem zweiten Mischer in dem Temperaturbereich von 130 °C bis 180 °C, d. h., die Verweildauer der Mischung in dem zweiten Mischer 18 stimmt mit der Verweildauer der Mischung in dem ersten Mischer 2 überein. Vorzugsweise wird die Temperatur der Mischung in dem zweiten Mischer konstant auf dem Wert gehalten, den die Mischung bei der Überführung von dem ersten Mischer 2 in den zweiten Mischer 18 eingenommen hat.

Aus dem oben Gesagten folgt, dass sich die Temperatur der Mischung über einen Zeitraum t₃ + (t₁ + t₂)/2 = t₂ (also wie gewünscht) in einem Temperaturbereich von 130 °C bis 180 °C befindet.

Die Verweilzeiten der Mischung in den Mischern 2, 18 sind identisch, so dass eine optimale Ausnutzung der Kapazität der Mischer gewährleistet ist.

### Beispiel:

- erster Zeitraum t₁, der benötigt wird, um die Mischungsbestandteile gleichmäßig zu verteilen: 2 min
- zweiter Zeitraum t₂, der benötigt wird, um in der Mischung eine zumindest nahezu vollständige Reaktion der Kieselsäure mit dem Silan herbeizuführen: 4 min
- Gesamtzeit, die sich aus der Summe des ersten Zeitraumes t₁ und des zweiten Zeitraumes t₂ zusammensetzt: 6 min
- Verweilzeit der Mischung in dem ersten Mischer: 3 min ((t₁ + t₂)/2)
- hiervon Zeitspanne t₃, in der die Temperatur in einem Temperaturbereich von 130 °C bis 180 °C liegt: 1 min ((t₂-t₁)/2)
- Verweilzeit in der Mischung in dem zweiten Mischer, wobei die Temperatur der Mischung in einem Temperaturbereich von 130 °C bis 180 °C liegt: 3 min ((t₁ + t₂)/2).

### Bezugszeichenliste (ist Teil der Beschreibung)

- 2: erste Mischer
- 4: Mischkammer
- 6: Rotoren
- 8: Sattel
- 10: Arbeitszylinder
- 12: Stempel
- 14: Pfeil
- 16: Trichter
- 18: zweiter Mischer
- 20: Eintrittsöffnung
- 22: Rotoren
- 24: Mischkammer
- 26: Austrittsöffnung
- 28: Sattel
- 30: Austrittsöffnung
- 32: Kanal
- 34: Absauganlage

## Patentansprüche

1. Verfahren zur Herstellung einer kieselsäurehaltigen Kautschukgrundmischung, das in zwei Stufen in unterschiedlichen Mischern (2,18) durchgeführt wird und bei dem die Mischungsbestandteile Kautschuk, Kieselsäure, Silan und weitere übliche Zusatzstoffe außer Vulkanisationsbestandteilen vermischt werden und die Kieselsäure mit dem Silan reagiert, **gekennzeichnet durch** folgende Verfahrensschritte:
- in einen ersten Mischer (2) werden zeitgleich oder zeitversetzt sämtliche Mischungsbestandteile eingebracht,
- die Mischungsbestandteile werden in dem ersten Mischer (2) zu einer Mischung vermischt,
- die in dem ersten Mischer (2) entstandene Mischung wird ohne Zwischenlagerung unmittelbar von dem ersten Mischer (2) in einen zweiten Mischer (18) überführt,
- in dem zweiten Mischer (18) wird die Mischung zumindest nahezu zu Ende gemischt, wobei die Temperatur zumindest über den größten Teil der Verweildauer der Mischung in dem zweiten Mischer in einem Temperaturbereich von 130 °C bis 180 °C liegt, in dem die Kieselsäure beschleunigt mit dem Silan reagiert.

2. Verfahren nach Anspruch 1, **dadurch gekennzeichnet, dass** die Mischung in dem ersten Mischer (2) auf eine Temperatur erwärmt wird, die in einem Temperaturbereich von 110 °C bis 140 °C liegt.

3. Verfahren nach Anspruch 1, **dadurch gekennzeichnet, dass** die Mischung in dem ersten Mischer (2) auf eine Temperatur erwärmt wird, die in einem Temperaturbereich von 130 °C bis 180 °C liegt.

4. Verfahren nach einem der Ansprüche 1 bis 3, **dadurch gekennzeichnet, dass** die Verweildauer der Mischung in dem ersten Mischer (2) zumindest nahezu mit der Verweildauer der Mischung in dem zweiten Mischer (18) übereinstimmt.

5. Verfahren nach Anspruch 4, **dadurch gekennzeichnet, dass**
- ein erster Zeitraum benötigt wird, um die Mischungsbestandteile der Mischung gleichmäßig zu verteilen
- ein zweiter Zeitraum, der länger als der erste Zeitraum ist, benötigt wird, um in der Mischung eine zumindest nahezu vollständige Reaktion der Kieselsäure mit dem Silan herbeizuführen und dass
- die jeweilige Verweildauer der Mischung in dem ersten Mischer (2) bzw. in dem zweiten Mischer (18) der Hälfte der Gesamtzeit entspricht, die sich aus dem ersten und dem zweiten Zeitraum zusammensetzt, wobei die Temperatur der Mischung in dem ersten Mischer (2) zumindest über eine Zeitspanne in dem Temperaturbereich von 130 °C bis 180 °C gehalten wird, die der Differenz zwischen dem zweiten Zeitraum und der Verweildauer der Mischung in dem zweiten Mischer (18) entspricht.

6. Verfahren nach einem der Ansprüche 1 bis 5, **dadurch gekennzeichnet, dass** der erste Mischer (2) ein Stempelmischer ist.

7. Verfahren nach einem der Ansprüche 1 bis 6, **dadurch gekennzeichnet, dass** die Rotoren (6) des ersten Mischers (2) ineinandergreifen.

8. Verfahren nach einem der Ansprüche 1 bis 7, **dadurch gekennzeichnet, dass** der zweite Mischer (18) ein stempelloser Mischer ist.

9. Verfahren nach einem der Ansprüche 1 bis 8, **dadurch gekennzeichnet, dass** die Rotoren (22) des zweiten Mischers (22) ineinandergreifen.

10. Verfahren nach einem der Ansprüche 1 bis 9, **dadurch gekennzeichnet, dass** der zweite Mischer (18) ein größeres Füllvolumen als der erste Mischer (2) hat.

11. Verfahren nach einem der Ansprüche 1 bis 10, **dadurch gekennzeichnet, dass** zwischen den Mischern (2,18) eine Absauganlage (34) angeordnet ist, mit der Reaktionsprodukte abgesaugt werden, die bei der Reaktion der Kieselsäure mit dem Silan im zweiten Mischer entstehen.

12. Verfahren nach einem der Ansprüche 1 bis 11, **dadurch gekennzeichnet, dass** die Überführung der Mischung von dem ersten Mischer (2) in den zweiten Mischer (18) unter Ausnutzung der Schwerkraft erfolgt.

13. Vorrichtung mit einem ersten Mischer (2) und einem zweiten Mischer (18) zur Durchführung des Verfahrens nach Anspruch 1, **dadurch gekennzeichnet, dass**
- der zweite Mischer (18) ein stempelloser Mischer (18) ist, der derart ausgebildet und mit Mitteln, insbesondere einem Antrieb versehen ist, dass er eine aus dem ersten Mischer (2) übernommene Kautschukgrundmischung durch Rotation seiner Rotoren (22) auf eine Temperatur in einem Temperaturbereich von 130 °C bis 180 °C erwärmen und/oder in diesem Temperaturbereich halten kann.

## Claims

1. Method of producing a silica-containing master batch of rubber, which method is carried out in two stages in different mixers (2, 18), and wherein the mixture ingredients of rubber, silica, silane and other conventional additives, except vulcanisation ingredients, are mixed, and wherein the silica reacts with the silane, **characterised by** the following method steps:
- all of the mixture ingredients are introduced into a first mixer (2) simultaneously or at staggered intervals,
- the mixture ingredients are mixed in the first mixer (2) to form a mixture,
- the mixture, produced in the first mixer (2), is directly transferred from the first mixer (2) to a second mixer (18) without any intermediate storage, and
- the mixture is mixed in the second mixer (18), at least vitually at the end, the temperature lying in a temperature range of from 130° C to 180° C, at least over most of the dwell-time of the mixture in the second mixer, the silica reacting in an accelerated manner with the silane in said temperature range.

2. Method according to claim 1, **characterised in that** the mixture in the first mixer (2) is heated to a temperature which lies in a temperature range of from 110° C to 140° C.

3. Method according to claim 1, **characterised in that** the mixture in the first mixer (2) is heated to a temperature which lies in a temperature range of from 130° C to 180° C.

4. Method according to one of claims 1 to 3, **characterised in that** the dwell-time of the mixture in the first mixer (2) is at least virtually identical to the dwell-time of the mixture in the second mixer (18).

5. Method according to claim 4, **characterised in that**
- a first period is required to distribute the ingredients of the mixture uniformly,
- a second period, which is longer than the first period, is required to cause an at least virtually complete reaction between the silica and the silane in the mixture, and **in that**
- the particular dwell-time of the mixture in the first mixer (2) or respectively in the second mixer (18) corresponds to half the total time made up of the first and second periods, the temperature of the mixture in the first mixer (2) being kept in the temperature range of from 130° C to 180° C, at least over a time span which corresponds to the difference between the second period and the dwell-time of the mixture in the second mixer (18).

6. Method according to one of claims 1 to 5, **characterised in that** the first mixer (2) is a ram-type mixer.

7. Method according to one of claims 1 to 6, **characterised in that** the rotors (6) of the first mixer (2) intermesh.

8. Method according to one of claims 1 to 7, **characterised in that** the second mixer (18) is a ramless mixer.

9. Method according to one of claims 1 to 8, **characterised in that** the rotors (22) of the second mixer (18) intermesh.

10. Method according to one of claims 1 to 9, **characterised in that** the second mixer (18) has a greater filling volume than the first mixer (2).

11. Method according to one of claims 1 to 10, **characterised in that** a suction system (34) is disposed between the mixers (2, 18), reaction products which are produced during the reaction between the silica and the silane in the second mixer, being evacuated by said system.

12. Method according to one of claims 1 to 11, **characterised in that** the mixture is transferred from the first mixer (2) to the second mixer (18) by utilising the force of gravity.

13. Apparatus, having a first mixer (2) and a second mixer (18), for accomplishing the method according to claim 1, **characterised in that**
- the second mixer (18) is a ramless mixer (18), which is configured in such a manner and is provided with means, more especially a drive, that it can heat a master batch of rubber, which has been taken from the first mixer (2), to a temperature in a temperature range of from 130° C to 180° C by rotating its rotors (22) and/or it can keep said batch in this temperature range.

## Revendications

1. Procédé de préparation d'un mélange de base de caoutchouc contenant de la silice, qui est mis en oeuvre en deux étapes dans des mélangeurs (2, 18) différents, et dans lequel les constituants du mélange que sont le caoutchouc, la silice, un silane et d'autres additifs usuels, outre les constituants de vulcanisation, sont mélangés, et la silice réagit avec le silane, **caractérisé par** les étapes suivantes :
- dans un premier mélangeur (2), on introduit simultanément, ou avec un décalage dans le temps, l'ensemble des constituants du mélange,
- on mélange dans le deuxième mélangeur (2) les constituants du mélange, pour obtenir un mélange,
- le mélange obtenu dans le premier mélangeur (2) est, sans stockage intermédiaire, directement transvasé du premier mélangeur (2) à un deuxième mélangeur (18),
- dans le deuxième mélangeur (18), le mélange est mélangé presque jusqu'à parachèvement, la température, au moins pendant la plus grande partie du temps de séjour du mélange dans le deuxième mélangeur, étant comprise dans la plage de températures de 130 à 180°C, dans laquelle la silice réagit d'une manière accélérée avec le silane.

2. Procédé selon la revendication 1, **caractérisé en ce que** le mélange, dans le premier mélangeur (2), est chauffé à une température qui est comprise dans une plage de températures de 110 à 140°C.

3. Procédé selon la revendication 1, **caractérisé en ce que** le mélange, dans le premier mélangeur (2), est chauffé à une température qui est comprise dans une plage de températures de 130 à 180°C.

4. Procédé selon l'une des revendications 1 à 3, **caractérisé en ce que** le temps de séjour du mélange dans le premier mélangeur (2) coïncide au moins approximativement avec le temps de séjour du mélange dans le deuxième mélangeur (18).

5. Procédé selon la revendication 4, **caractérisé en ce que**
- on a besoin d'un premier laps de temps pour répartir uniformément les constituants du mélange,
- on a besoin d'un deuxième laps de temps, plus long que le premier laps de temps, pour provoquer dans le mélange une réaction, au moins presque complète, de la silice avec le silane,
- le temps de séjour du mélange dans le premier mélangeur (2) ou dans le deuxième mélangeur (18) correspond à la moitié du temps total qui est constitué du premier laps de temps et du deuxième laps de temps, la température du mélange étant, dans le premier mélangeur (2), maintenue pendant au moins un certain laps de temps dans la plage de températures de 130 à 180°C, qui correspond à la différence entre le deuxième laps de temps et le temps de séjour du mélange dans le deuxième mélangeur (18).

6. Procédé selon l'une des revendications 1 à 5, **caractérisé en ce que** le premier mélangeur (2) est un mélangeur à piston.

7. Procédé selon l'une des revendications 1 à 6, **caractérisé en ce que** les rotors (6) du premier mélangeur entrent en prise l'un avec l'autre.

8. Procédé selon l'une des revendications 1 à 7, **caractérisé en ce que** le deuxième mélangeur (18) est un mélangeur sans piston.

9. Procédé selon l'une des revendications 1 à 8, **caractérisé en ce que** les rotors (22) du deuxième mélangeur (18) sont en prise l'un avec l'autre.

10. Procédé selon l'une des revendications 1 à 9, **caractérisé en ce que** le deuxième mélangeur (18) a un volume de remplissage plus grand que le premier mélangeur (2).

11. Procédé selon l'une des revendications 1 à 10, **caractérisé en ce qu'**entre les mélangeurs (2, 18) est disposée une installation d'aspiration (34), qui assure l'aspiration des produits de la réaction qui se forment dans le deuxième mélangeur lors de la réaction de la silice avec le silane.

12. Procédé selon l'une des revendications 1 à 11, **caractérisé en ce que** le transvasement du mélange du premier mélangeur (2) au deuxième mélangeur (18) s'effectue par utilisation de la force de gravité.

13. Appareillage comportant un premier mélangeur (2) et un deuxième mélangeur (18) pour mettre en oeuvre le procédé selon la revendication 1, **caractérisé en ce que**
- le deuxième mélangeur (18) est un mélangeur sans piston (18), qui est configuré, et est pourvu de moyens, en particulier d'un organe d'entraînement, de façon à pouvoir chauffer un mélange de base de caoutchouc, repris du premier mélangeur (2), par rotation de ces rotors (22), à une température comprise dans une plage de températures de 130 à 180°C, et/ou le maintenir dans cette plage de températures.
